# FASCICULE DE BREVET EUROPEEN

(11) **EP 1 796 333 B1**
(45) Date de publication et mention de la délivrance du brevet: **20.05.2015**
(21) Numéro de dépôt: 06125794.5
(22) Date de dépôt: 11.12.2006
(51) Int. Cl.: H04L 12/70

(54) **Procédé d'établissement de connexion entre des portions d'une application distribuée dans des noeuds connectés à un réseau de communication à plan de contrôle GMPLS.**
Verfahren zum Aufbau einer Verbindung zwischen Teile einer Anwendung, die in Knoten verteilt ist, die zu einem über einem GMPLS Kontrollebene verfügten Kommunikationsnetzwerk gehören.
Method to establish a connection between portions of an application distributed in nodes connected to communication network using a GMPLS control plane.

(30) Priorité: 12.12.2005 FR 0553831
(43) Date de publication de la demande: 13.06.2007
(73) Titulaire: ALCATEL LUCENT, 92100 Boulogne-Billancourt (FR)
(72) Inventeur: Berde, Bela, 75004, Paris (FR); Papadimitriou, Dimitri, 11 90, Brussels (BE)
(74) Mandataire: Sciaux, Edmond

(56) Documents cités:
- IGOR BRYSKIN MOVAZ NETWORKS DIMITRI PAPADIMITRIOU ALCATEL LOU BERGER MOVAZ NETWORKS: "Policy-Enabled Path Computation Communication Requirements; draft-bryskin-pce-policy-enabled-path-comp -00.txt" IETF STANDARD-WORKING-DRAFT, INTERNET ENGINEERING TASK FORCE, IETF, CH, octobre 2005 (2005-10), XP015042085 ISSN: 0000-0004
- EDITORS D PAPADIMITRIOU (ALCATEL) A FARREL (OLD DOG CONSULTING): "Generalized MPLS (GMPLS) RSVP-TE Signaling Extensions in support of Calls; draft-papadimitriou-ccamp-gmpls-rsvp-te-ca ll-00.txt" IETF STANDARD-WORKING-DRAFT, INTERNET ENGINEERING TASK FORCE, IETF, CH, novembre 2005 (2005-11), XP015042968 ISSN: 0000-0004
- BELOTTI D PAPADIMITRIOU ALCATEL N LARKIN DATA CONNECTION Z LIN LUCENT D PENDARAKIS TELLIUM S: "Generalized MPLS (GMPLS) RSVP-TE Usage and Extensions For Automatically Switched Optical Network (ASON) ; draft-lin-ccamp-gmpls-ason-rsvpte-00.txt" IETF STANDARD-WORKING-DRAFT, INTERNET ENGINEERING TASK FORCE, IETF, CH, juin 2002 (2002-06), XP015004208 ISSN: 0000-0004
- BERDE, B. ADBELKRIM, H. VIGOUREUX, M. DOUVILLE, R. PAPADIMITRIOU, D.: "Improving network performance through policy-based management applied to generalized multi-protocol label switching" ISCC 05, 27 juin 2005 (2005-06-27), - 30 juin 2005 (2005-06-30) pages 739-745, XP002391654

## Description

L'invention concerne les réseaux de communication à plan de contrôle GMPLS, et plus précisément l'établissement d'une connexion entre des portions d'une application distribuée entre des noeuds connectés à de tels réseaux.

On entend ici par « réseau de communication à plan de contrôle GMPLS » un réseau à commutation d'étiquettes (ou « label switched network ») de type dit « à commutation de paquets » (ou « orienté connexion ») et présentant une architecture GMPLS (pour « Generalized Multi Protocol Label Switching »), comme par exemple les réseaux ATM, Frame Relay (FR), IP et Ethernet, ou de type dit « à commutation de circuits » (ou « non paquet ») présentant une architecture GMPLS, comme par exemple les réseaux TDM (tels que SONET/SDH, PDH, G.709), les réseaux à commutation de longueur d'onde ou les réseaux à commutation spatiale (comme par exemple la commutation depuis un port d'entrée vers un port de sortie).

Il est rappelé que dans un réseau à commutation d'étiquettes les chemins de connexion qui sont établis entre des noeuds (ou « hosts ») sont appelés LSPs (pour « Label Switched Paths » - chemins à commutation d'étiquettes).

Comme le sait l'homme de l'art, en raison de la tendance à l'intégration et à la distribution des systèmes d'information, la quantité de données qui est transportée par les réseaux, aussi bien à la demande que de façon organisée, croît plus rapidement que la quantité de données qui peut être acquise et traitée par les application dites centralisées. De ce fait, les réseaux doivent de plus en plus souvent devenir des média collaboratifs pour l'échange d'informations et posséder un coeur de services de haut niveau supportés par les fournisseurs d'accès tout en offrant des services basiques de bande passante et de connectivité.

Ces services de haut niveau servent à des applications qui utilisent des ressources distribuées, comme par exemple GRID, e-Science, e-Government, IPTV (pour « Internet Protocol TeleVision » - télévision par Internet) ou VoD (pour « Video on Demand » - vidéo à la demande). De telles applications, appelées ci-après « applications distribuées » du fait qu'elles comportent au moins deux portions implantées dans des noeuds connectés au réseau, requièrent un plan de contrôle de service(s) coopératif et adaptatif, basé sur le protocole Internet (IP), comme par exemple le plan de contrôle GMPLS.

Pour que des portions d'applications puissent fonctionner ensemble, elles doivent être connectées l'une à l'autre, au moyen d'un chemin de connexion avec Qualité de Service (ou QoS), de type LSP. Pour établir une telle connexion, les noeuds dans lesquels sont implantées les portions d'une application distribuée doivent se communiquer leurs besoins en terme de ressources de réseau. Pour ce faire, ils utilisent par exemple le protocole de réservation de ressources appelé RSVP (« Resource ReSerVation Protocol »), et plus précisément des messages RSVP de type « path message » et « Resv message ». Ces noeuds étant externes au réseau, bien que connectés à celui-ci, l'échange de messages RSVP se fait directement, sans que le réseau ne puisse le contrôler. Or, la plupart des opérateurs de réseau interdisent la réservation directe de ressources par des noeuds d'utilisateurs (externes à leurs réseaux) car il pertur-be leur mécanisme interne de réservation de ressources.

L'homme de l'art connaît du document de Igor BRYNSKIN, MOVAZ NETWORKS, Dimitri PAPADIMITRIOU, ALCATEL et Lou BERGER, MOVAZ NETWORKS : « Policy-Enable Path Computation Communication Requirements ; draft-bryskin-pcr-policy-enable-path-comp-00.txt» ; IETF STANDARD-WORKING-DRAFT, INTERNET ENGINEERING TASK FORCE, IETF, CH, Octobre 2005 un élément de calcul de chemin capable de calculer un chemin depuis un client de calcul de chemin particulier.

L'invention a donc pour but de remédier à l'inconvénient précité en permettant une réservation de ressources, au sein d'un réseau de communication à plan de contrôle GMPLS, à l'initiative de noeuds externes (comportant chacun une portion d'une application distribuée et un module de signalisation agencé pour gérer l'établissement de connexions).

Elle propose à cet effet un procédé consistant, en cas de besoin d'établissement d'une connexion entre des premier et second noeuds externes :
i) à générer dans le premier noeud externe un premier message requérant l'établissement d'une session de connexion et comportant des paramètres définissant une connexion à établir, puis à transmettre ce premier message à destination du second noeud externe, via le réseau et au moyen d'un protocole de session de service communication,
ii) à analyser le premier message en un endroit choisi du réseau afin de traduire les paramètres qu'il contient pour le plan de contrôle GMPLS et de vérifier leur compatibilité avec d'autres applications résidant dans le réseau et avec le plan de contrôle GMPLS,
iii) puis à envoyer le premier message dans le réseau, au moyen du protocole de session de service communication, afin de le transmettre au second noeud externe,
iv) à réception du premier message dans le second noeud externe à déterminer si les paramètres de connexion qu'il contient sont supportés par sa portion d'application distribuée et/ou son module de signalisation, et
v) en cas de support, à transmettre un second message de confirmation d'établissement de session au premier noeud externe, au moyen du protocole de session de service communication, de sorte que son module de signalisation initie l'établissement de la connexion.

Le procédé selon l'invention peut comporter d'autres caractéristiques qui peuvent être prises séparément ou en combinaison, et notamment :
- avant de procéder à la transmission du premier message, la portion d'application distribuée du premier noeud externe peut transmettre les paramètres de connexion à un module d'adaptation de service qu'il comprend afin qu'il vérifie auprès du module de signalisation s'il supporte ces paramètres de connexion. Puis, on génère le premier message (demande de session) et on le transmet au moyen du protocole de session de service communication lorsque les paramètres de connexion sont supportés par le module de signalisation et par les autres applications résidant dans le réseau ;
- à l'étape ii) on peut analyser le premier message de la session de service communication au moyen d'un équipement de contrôle de réservation de ressources, couplé au réseau en au moins un endroit choisi. Cet équipement de contrôle comprend un module agent d'adaptation de agent applicatif, propre à se substituer à la portion d'application distribuée du second noeud externe, et un module agent GMPLS propre à communiquer avec le plan de contrôle GMPLS. Le module agent d'adaptation de service est chargé de traduire les paramètres de connexion contenus dans chaque premier message analysé afin de vérifier auprès du module agent applicatif s'ils sont compatibles avec les autres applications résidant dans le réseau et auprès du module agent GMPLS s'ils sont compatibles avec le plan de contrôle GMPLS. En cas de compatibilité, le module agent d'adaptation de service procède alors, à l'étape iii), à l'envoi du premier message dans la session de service communication, à l'endroit choisi ;
   ➢ cet endroit choisi est par exemple un noeud de commutation du réseau auquel le premier noeud externe est connecté et qui lui sert de point d'entrée ;
- à l'étape iv) le second noeud externe peut réceptionner le premier message via le protocole de session de service communication. Un module d'adaptation de service qu'il comprend le transmet alors à sa portion d'application distribuée et/ou son module de signalisation afin qu'ils déterminent si les paramètres de connexion qu'il contient sont supportés. En cas de support, c'est alors la session de service communication qui peut convoyer le second message vers le premier noeud externe;
- à l'étape v) le premier noeud externe peut réceptionner le second message transmis à son module d'adaptation de service afin qu'il ordonne au module de signalisation d'initier l'établissement de la connexion.

L'invention propose également un système de contrôle de réservation de ressources comprenant un équipement de contrôle de réservation de ressources pour un réseau de communication à plan de contrôle GMPLS auquel sont connectés des noeuds externes comportant chacun une portion d'une application distribuée et un module de signalisation agencé pour gérer l'établissement de connexions, selon la revendication 7.

Cet équipement se caractérise par le fait qu'il est chargé, d'une part, d'analyser en au moins un endroit choisi du réseau chaque premier message (ou demande de session), transmis d'un premier noeud externe vers un second noeud externe par une session de service communication et comportant des paramètres définissant une connexion à établir, afin de traduire ses paramètres pour le plan de contrôle GMPLS et vérifier leur compatibilité respectivement avec les autres applications résidant dans le réseau et avec le plan de contrôle GMPLS, et d'autre part, en cas de compatibilité, d'envoyer le premier message dans le réseau (en continuant la session de service communication) afin de le transmettre au second noeud externe.

L'équipement compris dans le système de contrôle de réservation de ressources selon l'invention peut comporter d'autres caractéristiques qui peuvent être prises séparément ou en combinaison, et notamment :
- il peut comprendre, d'une première part, un module agent applicatif chargé de se substituer à la portion d'application distribuée du second noeud externe, d'une deuxième part, un module agent GMPLS chargé de communiquer avec le plan de contrôle GMPLS, et d'une troisième part, un module agent d'adaptation de service chargé de traduire les paramètres contenus dans chaque premier message du réseau pour le plan de contrôle GMPLS et de vérifier auprès du module agent applicatif et du module agent GMPLS si les paramètres qu'il contient sont respectivement compatibles avec les applications résidant dans le réseau et avec le plan de contrôle GMPLS, et pour envoyer le premier message dans le réseau à l'endroit choisi en cas de compatibilité ;
- il peut par exemple être implanté dans un noeud de commutation périphérique du réseau de manière à fonctionner en mode centralisé;
- en variante, il peut par exemple être couplé à chaque noeud de commutation périphérique du réseau.

Le système de contrôle de réservation de ressources comprends également un noeud externe (ou host) destiné à être connecté à un réseau de communication à plan de contrôle GMPLS et comportant une portion d'une application distribuée et un module de signalisation chargé de gérer l'établissement de connexion avec au moins un autre noeud externe comportant une autre portion de l'application distribuée et un module de signalisation.

Ce noeud externe se caractérise par le fait qu'il comprend un module d'adaptation de service chargé, lorsqu'il reçoit des paramètres définissant une connexion à établir avec un autre noeud externe et provenant de la portion connexion à établir avec un autre noeud externe et provenant de la portion d'application distribuée (locale), de vérifier auprès du module de signalisation s'il supporte les paramètres de connexion, et en cas de support, de générer un premier message requérant l'établissement d'une session de service communication et comportant les paramètres définissant la connexion à établir, afin qu'il soit transmis au moyen d'un protocole de session de service communication à destination de l'autre noeud externe.

Par ailleurs, en cas de réception d'un premier message, le module d'adaptation de service peut être chargé de déterminer si les paramètres de connexion qu'il contient sont supportés par sa portion d'application distribuée (locale) et/ou son module de signalisation, puis, en cas de support, de générer un second message de confirmation d'établissement de session de connexion afin qu'il soit transmis au moyen du protocole de session de service communication à destination du noeud externe qui a transmis le premier message, de sorte que son module de signalisation initie l'établissement de la connexion objet du premier message.

En outre, en cas de réception d'un second message répondant à un premier message précédemment transmis, le module d'adaptation de service peut être chargé d'ordonner au module de signalisation d'initier l'établissement de la connexion objet des premier et second messages.

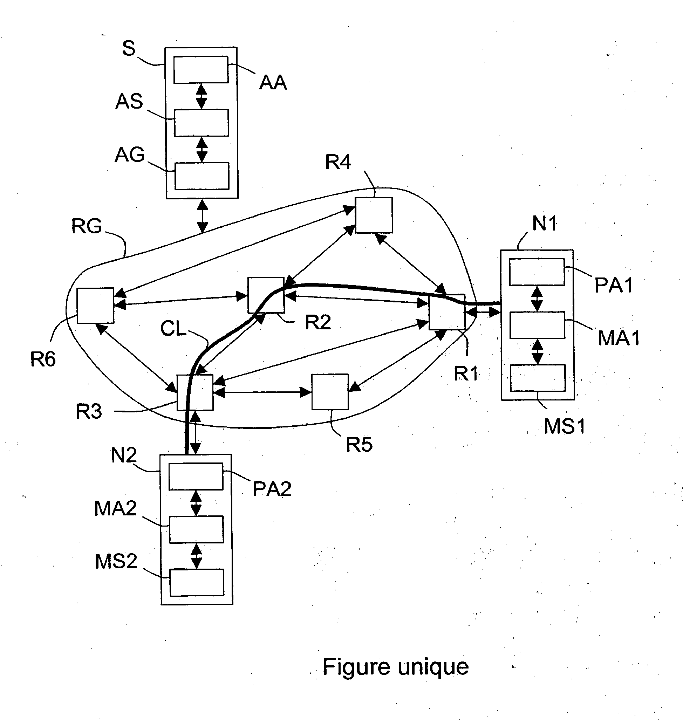

D'autres caractéristiques et avantages de l'invention apparaîtront à l'examen de la description détaillée ci-après, et du dessin annexé, sur lequel l'unique figure illustre de façon très schématique un réseau de communication à plan de contrôle GMPLS comprenant un équipement de contrôle de réservation de ressources selon l'invention et auquel sont connectés des noeuds externes (ou hosts) selon l'invention. Le dessin annexé pourra non seulement servir à compléter l'invention, mais aussi contribuer à sa définition, le cas échéant.

L'invention a pour objet de permettre à des noeuds externes, qui sont connectés à un réseau de communication à plan de contrôle GMPLS, de réserver des ressources de réseau pour établir une connexion entre eux, sous le contrôle du réseau.

Dans ce qui suit, on considère à titre d'exemple non limitatif que le réseau de communication à plan de contrôle GMPLS est un réseau à commutation d'étiquettes (ou « label switched network ») de type dit « à commutation de paquets » (ou « orienté connexion) et présentant une architecture GMPLS, comme par exemple un réseau ATM, Frame Relay (FR), IP ou Ethernet. Mais, l'invention n'est pas limitée aux réseaux à commutation de paquets. Elle concerne également les réseaux à commutation d'étiquettes de type dit « à commutation de circuits » (ou « non paquet ») présentant une architecture GMPLS, comme par exemple les réseaux TDM (tels que SONET/SDH, PDH, G.709), les réseaux à commutation de longueur d'onde ou les réseaux à commutation spatiale (comme par exemple la commutation depuis un port d'entrée vers un port de sortie).

Comme cela est schématiquement illustré sur l'unique figure, un réseau à plan de contrôle GMPLS (ci-après appelé « réseau GMPLS » RG) comporte généralement, une multiplicité d'éléments de réseau définissant des noeuds internes Ri, tels que des commutateurs ou routeurs à commutation d'étiquettes (ou LSRs pour « Label Switched Routers »), couplés entre eux.

Ces noeuds internes Ri peuvent être regroupés en deux catégories : les noeuds périphériques (comme par exemple des « Label Edge Routers »), et les noeuds de coeur (comme par exemple des « Label Core Routers »). Les noeuds périphériques sont chargés d'établir des chemins de connexion (également appelés chemins de commutation d'étiquettes (ou LSPs pour « Label switched Paths »)) au sein du réseau RG, tandis que les noeuds de coeur (ici R2) sont chargés de la commutation.

Dans l'exemple illustré, non limitatif, le réseau comporte six noeuds internes (i = 1 à 6, R1 à R6) dont cinq périphériques (R1 et R3 à R6) et un de coeur (R2). Mais l'indice i peut prendre n'importe quelle valeur supérieure ou égale à 2.

Par ailleurs, dans ce qui suit on entend par « chemin de connexion » un trajet entre un premier noeud interne périphérique (par exemple R1), constituant un point d'entrée pour un premier noeud externe (ou host) N1, et un second noeud interne périphérique (par exemple R3), constituant un point d'entrée pour un second noeud externe (ou host) N2, défini par une séquence de liens établis entre deux noeuds internes voisins, ou, ce qui revient au même, défini par une suite ordonnée de noeuds internes Ri. Dans un réseau GMPLS, chaque noeud interne périphérique est agencé, lorsqu'il constitue une source, de manière à calculer le meilleur chemin de connexion pour transférer les flux de données qu'il reçoit vers le noeud interne périphérique de destination, compte tenu du service associé aux flux, de la topologie en cours du réseau et des charges en cours des liens.

Par ailleurs, dans l'exemple illustré seuls deux noeuds externes Nj (j = 1 ou 2) ont été représentés, mais beaucoup plus de noeuds externes peuvent être connectés au réseau GMPLS RG. Ces noeuds externes Ni sont par exemple des terminaux d'utilisateurs ou d'entreprises, appartenant à des clients du réseau.

Chaque noeud externe Nj comprend une portion PAj d'une application distribuée et un module de signalisation MSj chargé de gérer l'établissement de connexion avec au moins un autre noeud Nj' comportant une portion complémentaire PAj' de l'application distribuée. Par exemple, chaque module de signalisation MSj est de type GMPLS. Mais, cela n'est pas obligatoire, l'important étant que le module de signalisation MSj soit capable d'établir une connexion (ou un flux, ou encore un circuit) dans le réseau GMPLS RG.

L'établissement d'une connexion (ici de type LSP) est destiné à permettre aux portions PA1 et PA2 de l'application distribuée, respectivement implantées dans les noeuds externes N1 et N2, d'échanger des données entre elles.

L'invention intervient dans la phase d'établissement d'une connexion, et plus précisément, elle intervient en amont de la phase d'établissement d'une connexion afin de la rendre possible (c'est-à-dire avec l'accord du réseau GMPLS RG).

L'invention propose un procédé permettant de déterminer si une connexion (ici de type LSP) peut être établie, via le réseau GMPLS RG, entre des premier N1 et second N2 noeuds externes. Ce procédé comprend au moins les cinq étapes décrites ci-après.

La première étape commence lorsque la première portion PA1 de l'application distribuée, implantée dans le premier noeud externe N1, souhaite échanger des données avec la seconde portion (complémentaire) PA2 de cette même application distribuée, implantée dans le second noeud externe N2. Cet échange nécessite une connexion définie par un ensemble de paramètres bien connus de l'homme de l'art, comme par exemple la bande passante minimale ou le délai de transmission.

Ces paramètres sont intégrés, dans le premier noeud N1, dans un premier message requérant l'établissement d'une session de connexion.

Par exemple, et comme illustré, chaque noeud externe Nj comprend un module d'adaptation de service MAj couplé à son module de signalisation MSj et sa portion d'application distribuée PAj. Ce module d'adaptation de service MAj reçoit les paramètres de connexion définis par la portion d'application distribuée PAj et les transmet au module de signalisation MSj afin qu'il vérifie s'il peut les supporter.

Si ce n'est pas le cas, le module de signalisation MSj le signale au module d'adaptation de service MAj afin qu'il avertisse la portion d'application distribuée PAj. La connexion ne peut donc pas être initiée.

Si les paramètres de connexion sont supportés, le module de signalisation MSj le signale au module d'adaptation de service MAj.

Ce dernier génère alors un premier message comportant les paramètres de connexion, puis il demande à une session de service communication de le transmettre, au moyen d'un protocole de session de service communication, du premier noeud externe N1 vers le second noeud externe N2, via le réseau GMPLS RG. Le premier message pénètre dans le réseau GMPLS RG au niveau du noeud interne R1.

La deuxième étape consiste à détecter et analyser le premier message en un endroit choisi du réseau GMPLS RG afin de vérifier la compatibilité des paramètres de connexion qu'il contient avec le plan de contrôle GMPLS et avec les applications résidant dans le réseau.

Pour ce faire, le réseau GMPLS RG peut par exemple comprendre un équipement de contrôle de réservation de ressources S, par exemple réalisé sous la forme d'un serveur. Ce serveur S peut être soit centralisé, comme c'est le cas dans l'exemple non limitatif illustré sur l'unique figure, soit distribué. Lorsque le serveur S est centralisé, il est couplé à certains noeuds internes Ri, par exemple les noeuds internes périphériques, et chargé d'observer tous les trafics qui transitent par eux afin de détecter chaque premier message de la session de service communication. Lorsque le serveur S est distribué, il est implanté dans certains noeuds internes Ri, par exemple les noeuds internes périphériques, et chargé d'observer tous les trafics qui transitent par son noeud interne afin de détecter chaque premier message de la session de service communication qu'il reçoit.

Il n'est pas nécessaire que les noeuds externes Nj sachent que le serveur de contrôle S existe.

Lorsque le serveur S détecte un premier message, il analyse les paramètres de connexion qu'il contient afin de vérifier leur compatibilité avec le plan de contrôle GMPLS et avec les applications résidant dans le réseau.

Pour ce faire, le serveur S comprend par exemple un module agent applicatif AA, un module agent GMPLS AG et un module agent d'adaptation de service AS.

Le module agent d'adaptation de service AS est chargé de traduire pour le plan de contrôle GMPLS les paramètres de connexion qui sont contenus dans chaque premier message parvenu en au moins un endroit choisi du réseau GMPLS RG et de communiquer ces paramètres de connexion au module agent applicatif AA et au module agent GMPLS AG, afin qu'ils vérifient s'ils sont compatibles respectivement avec les applications résidant dans le réseau et avec le plan de contrôle GMPLS. Il s'agit donc d'une couche placée au dessus de la couche du plan de contrôle GMPLS.

Le module agent applicatif AA est chargé de se substituer à la portion d'application distribuée PA1 du second noeud interne N2. Il s'agit d'une couche placée au dessus de la couche à laquelle appartient le module agent d'adaptation de service AS. Lorsqu'il reçoit des paramètres de connexion du module agent d'adaptation de service AS, le module agent applicatif AA vérifie s'ils sont compatibles avec les applications qui résident dans le réseau.

Le module agent GMPLS est chargé de communiquer avec le plan de contrôle GMPLS. Il s'agit donc d'une couche placée au niveau du plan de contrôle GMPLS. Lorsque le module agent GMPLS reçoit des paramètres de connexion du module agent d'adaptation de service AS, il détermine si les ressources qui devront être réservées pour établir la connexion définie par ces paramètres sont compatibles avec le mécanisme interne de réservation de ressources du réseau GMPLS RG, lequel est géré par le plan de contrôle GMPLS.

Si le module agent applicatif AA et/ou le module agent GMPLS AG signale(nt) au module agent d'adaptation de service AS que la connexion ne peut pas être établie, alors la connexion ne peut pas être autorisée. Le premier message n'est pas de nouveau envoyé le réseau GMPLS RG. Un message peut alors être adressé par le serveur S au premier noeud externe N1, au moyen du protocole de session de service communication, pour l'avertir de l'interdiction d'établir la connexion.

Si le module agent applicatif AA et le module agent GMPLS AG signalent au module agent d'adaptation de service AS que la connexion peut être établie, alors le module agent d'adaptation de service AS envoie le premier message dans le réseau GMPLS RG au niveau de l'endroit où il l'a extrait, afin qu'il continue la session de service communication en cours et donc reprenne son trajet vers sa destination initiale (le second noeud externe N2). Cet envoi constitue la troisième étape du procédé selon l'invention.

La quatrième étape débute lorsque le second noeud externe N2 reçoit le premier message via le protocole de session de service communication. Elle consiste à déterminer si les paramètres de connexion qui sont contenus dans ce premier message sont supportés par la seconde portion d'application distribuée PA2 et/ou par le module de signalisation MS2.

Par exemple, le module d'adaptation de service MA2 du second noeud externe N2 reçoit le premier message et communique les paramètres de connexion qu'il contient à la seconde portion d'application distribuée PA2 et au module de signalisation MS2 afin qu'ils vérifient s'ils peuvent les supporter.

Si la seconde portion d'application distribuée PA2 et/ou le module de signalisation MS2 signale(nt) au module d'adaptation de service MA2 qu'il(s) ne peu(ven)t pas supporter la connexion requise, alors le module d'adaptation de service MA2 génère un second message signalant l'impossibilité d'établir la connexion. Puis, le module d'adaptation de service MA2 ordonne à son second noeud externe N2 de le transmettre à destination du premier noeud externe N1, via le réseau GMPLS RG et via le protocole de session de service communication. A réception du second message, le module d'adaptation de service MA1 du premier noeud externe N1 avertit la première portion d'application distribuée PA1 de l'impossibilité d'établir la connexion qu'elle a demandée.

Si la seconde portion d'application distribuée PA2 et le module de signalisation MS2 signalent au module d'adaptation de service MA2 qu'ils peuvent supporter la connexion requise, alors le module d'adaptation de service MA2 génère un second message signalant que la connexion peut être établie. Puis, le module d'adaptation de service MA2 ordonne à son second noeud externe N2 de le transmettre à destination du premier noeud externe N1, via le réseau GMPLS RG et via le protocole de session de service communication. A réception du second message, le module d'adaptation de service MA1 du premier noeud externe N1 ordonne au module de signalisation MS1 d'établir la connexion demandée par la première portion d'application distribuée PA1 et définie par les paramètres de connexion précédemment communiqués.

Dans l'une ou l'autre des situations, la génération d'un second message et sa transmission constituent la cinquième étape du procédé selon l'invention.

Une fois que le module de signalisation MS1 est autorisé à établir la connexion, le mécanisme d'établissement de cette connexion est tout à fait classique. Le réseau GMPLS RG ayant autorisé la réservation de ressources en vue de l'établissement de la connexion, il n'intervient plus dans la phase d'établissement de connexion. Ce mécanisme étant bien connu de l'homme de l'art, il ne sera pas décrit ici. Il est simplement rappelé qu'il se fait au moyen du protocole RSVP, tout d'abord par envoie d'un message de type « RSVP-TE path message » du module de signalisation MS1 du premier noeud externe N1 vers le module de signalisation MS2 du second noeud externe N2, via le réseau GMPLS RG et plus précisément les noeuds internes du « futur » chemin de connexion (LSP), ici R1 à R3, afin de procéder à la réservation de ressources en chaque noeud, puis par envoie d'un message de type « RSVP-TE Resv message » du module de signalisation MS2 du second noeud externe N2 vers le module de signalisation MS1 du premier noeud externe N1, via le réseau GMPLS RG et plus précisément les noeuds internes du « futur » chemin de connexion (LSP), ici R3 à R1, afin de confirmer que les ressources ont bien été réservées en chaque noeud.

Une fois que le module de signalisation MS1 du premier noeud externe N1 a reçu le message de type « RSVP-TE Resv message », contenant l'ensemble des paramètres généraux caractérisant le chemin de connexion (LSP) établi auprès des noeuds internes qui le constitue, il avertit la première portion PA1 de l'application distribuée. Il est rappelé qu'un message de type « RSVP-TE Resv message comprend notamment un objet appelé « ADSPEC » défini par la règle standardisée RFC 2210, et que les paramètres généraux qui sont contenus dans l'objet ADSPEC sont définis par la règle standardisée RFC 2215 (nombre de sauts (« hops »), bande passante estimée, délai de transmission minimal sur le chemin, et MTU composé). Une fois l'autorisation reçue, la première portion PA1 de l'application distribuée peut commencer à échanger des données avec la seconde portion complémentaire PA2 implantée dans le second noeud externe N2.

De préférence, une fois que le chemin de connexion (LSP) a été établi au moyen du protocole RSVP-TE, le module d'adaptation de service MA1 du premier noeud externe N1 transmet périodiquement un message de rafraîchissement de réservation, par exemple du même type qu'un premier message, à destination du module d'adaptation de service MA2 du second noeud externe N2. De même, le module d'adaptation de service MA2 du second noeud externe N2 transmet périodiquement un message de rafraîchissement de réservation, par exemple du même type qu'un second message, à destination du module d'adaptation de service MA1 du premier noeud externe N 1.

Les modules d'adaptation de service MAj, les modules de signalisation MSj, les portions d'application distribuée PAj, le(s) module(s) agent applicatif AA, le(s) module(s) agent GMPLS AG et le(s) module(s) agent d'adaptation de service AS, peuvent être réalisés sous la forme de circuits électroniques, de modules logiciels (ou informatiques), ou d'une combinaison de circuits et de logiciels.

L'invention ne se limite pas aux modes de réalisation de procédé d'établissement de connexion, d'équipement de contrôle et de noeud externe décrits ci-avant, seulement à titre d'exemple, mais elle englobe toutes les variantes que pourra envisager l'homme de l'art dans le cadre des revendications ci-après.

## Revendications

1. Procédé d'établissement de connexion entre des noeuds externes (Nj) connectés à un réseau de communication à plan de contrôle GMPLS (RG) et comportant chacun une portion (PAj) d'une application distribuée et un module de signalisation (MSj) agencé pour gérer l'établissement de connexions, **caractérisé en ce qu'**il consiste en cas de besoin d'établissement d'une connexion entre des premier (N1) et second (N2) noeuds externes, i) à générer dans le premier noeud externe (N1), au moyen d'un protocole de session de service communication, un premier message requérant l'établissement d'une session de connexion et comportant des paramètres définissant une connexion à établir, puis à transmettre ce premier message à destination du second noeud externe (N2), via ledit réseau (RG), ii) à analyser ledit premier message en un endroit choisi dudit réseau (RG) afin de traduire les paramètres qu'il contient pour le plan de contrôle GMPLS et de vérifier leur compatibilité avec d'autres applications résidant dans le réseau et avec le plan de contrôle GMPLS, iii) en cas de compatibilité, à envoyer ledit premier message dans ledit réseau (RG), au moyen du protocole de session de service communication, afin de le transmettre audit second noeud externe (N2), iv) à réception dudit premier message dans ledit second noeud externe (N2) à déterminer si les paramètres de connexion qu'il contient sont supportés par sa portion d'application distribuée (PA2) et/ou son module de signalisation (MS2), v) en cas de support,
à transmettre un second message de confirmation d'établissement de session audit premier noeud externe (N1), au moyen du protocole de session de service communication, de sorte que son module de signalisation (MS1) initie l'établissement de ladite connexion.

2. Procédé selon la revendication 1, **caractérisé en ce qu'**avant de procéder à la transmission dudit premier message, ladite portion d'application distribuée (PA1) du premier noeud externe (N1) transmet lesdits paramètres de connexion à un module d'adaptation de service (MA1) qu'il comprend afin qu'il vérifie auprès du module de signalisation (MS1) s'il supporte lesdits paramètres de connexion, et en cas de support, on génère ledit premier message avec ledit module d'adaptation de service (MA1) du premier noeud externe (N1) et on le transmet au moyen du protocole de session de service communication.

3. Procédé selon l'une des revendications 1 et 2, **caractérisé en ce qu'**au ii) on analyse ledit premier message de la session de service communication au moyen d'un équipement de contrôle de réservation de ressources (S) couplé audit réseau (RG) en au moins un endroit choisi et comprenant un module agent applicatif (AA) propre à se substituer à la portion d'application distribuée (PA2) du second noeud externe (N2), un module agent GMPLS (AG) propre à communiquer avec ledit plan de contrôle GMPLS, et un module agent d'adaptation de service (AA) agencé pour traduire les paramètres de connexion contenus dans chaque premier message pour le plan de contrôle GMPLS et pour vérifier auprès desdits module agent applicatif (AA) et module agent GMPLS (AG) si les paramètres contenus dans chaque premier message sont compatibles respectivement avec les autres applications résidant dans le réseau (RG) et avec ledit plan de contrôle GMPLS, et **en ce qu'**au iii) ledit module agent applicatif (AA) procède à l'envoi dudit premier message dans ledit réseau (RG) audit endroit choisi en cas de compatibilité.

4. Procédé selon la revendication 3, **caractérisé en ce que** ledit endroit choisi est un noeud de commutation (R1) du réseau (RG) auquel ledit premier noeud externe (N1) est connecté et qui lui sert de point d'entrée.

5. Procédé selon l'une des revendications 1 à 4, **caractérisé en ce qu'**au iv) ledit second noeud externe (N2) réceptionne ledit premier message via le protocole de session de service communication et le transmet à un module d'adaptation de service (MA2) qu'il comprend, afin qu'il détermine si les paramètres de connexion qu'il contient sont supportés par sa portion d'application distribuée (PA2) et/ou son module de signalisation (MS2), et **en ce qu'**au v) ledit module d'adaptation de service (MA2) dudit second noeud externe (N2) génère ledit second message lorsque lesdits paramètres sont supportés par la portion d'application distribuée (PA2) et/ou le module de signalisation (MS2) dudit second noeud externe (N2), afin qu'il soit transmis par la session de service communication vers ledit premier noeud externe (N1).

6. Procédé selon l'une des revendications 2 à 5, **caractérisé en ce qu'**au v) ledit premier noeud externe (N1) réceptionne ledit second message transmis à son module d'adaptation de service (MA1) afin qu'il ordonne à son module de signalisation (MS1) d'initier l'établissement de ladite connexion.

7. Système de contrôle de réservation de ressources comprenant un équipement de contrôle de réservation de ressources (S) pour un réseau de communication à plan de contrôle GMPLS (RG) ledit système comprenant en outre des noeuds externes (Nj) connectés audit réseau de communication, lesdits noeuds externes (N1, N2) incluant un premier noeud externe (N1) comportant une première portion d'une application distribuée (PA1) et un premier module de signalisation (MS1) agencé pour gérer l'établissement de connexions avec au moins un second noeud externe (N2) et un second noeud externe (N2) comportant une seconde portion (PA2) de ladite application distribuée et un second module de signalisation (MS2) agencé pour gérer l'établissement de connexions avec au moins le premier noeud externe (N1), dans lequel le premier noeud externe (N1) comprend en outre un module d'adaptation de service (MA1) agencé, en cas de réception de paramètres définissant une connexion à établir avec le second noeud externe (N2) et provenant de la première portion d'application distribuée (PA1), pour vérifier auprès du premier module de signalisation (MS1) s'il supporte lesdits paramètres de connexion, et en cas de support, pour générer à destination dudit second noeud externe (N2) un premier message requérant l'établissement d'une session de connexion et comportant lesdits paramètres définissant la connexion à établir, afin qu'il soit transmis au moyen d'un protocole de session de service communication à destination du second noeud externe (N2) et en ce qu'en cas de réception d'un second message répondant audit premier message précédemment transmis, ledit module d'adaptation de service (MA1) est agencé pour ordonner audit premier module de signalisation (MS1) d'initier l'établissement de la connexion objet desdits premier et second messages, et dans lequel le second noeud externe (N2) comporte un second module d'adaptation de service (MS2) agencé pour déterminer, en cas de réception du premier message, si les paramètres de connexion que contient ledit premier message sont supportés par la seconde portion d'application distribuée (PA2) et/ou le second module de signalisation (MS2), puis, en cas de support, pour générer le second message de confirmation d'établissement de session à destination du premier noeud externe (N1) ayant transmis ledit premier message, de sorte que le premier module de signalisation (MS1) initie l'établissement de la connexion objet dudit premier message **caractérisé en ce que** ledit équipement de contrôle de réservation de ressources (S) agencé i) pour analyser en au moins un endroit choisi dudit réseau (RG) chaque premier message, transmis du premier noeud externe (N1) vers le second noeud externe (N2) par une session de service communication, requérant l'établissement d'une session de connexion et comportant des paramètres définissant une connexion à établir, afin de traduire ses paramètres pour le plan de contrôle GMPLS et vérifier leur compatibilité avec d'autres applications résidant dans ledit réseau (RG) et avec ledit plan de contrôle GMPLS, et ii) en cas de compatibilité, pour envoyer ledit premier message dans ledit réseau afin de le transmettre audit second noeud externe (N2) en continuant la session de service communication.

8. Système de contrôle de réservation de ressources (S) selon la revendication 7, **caractérisé en ce que** l'équipement de contrôle de réservation de ressources (S) comprend i) un module agent applicatif (AA) agencé pour se substituer à la portion d'application distribuée (PA2) dudit second noeud externe (N2), ii) un module agent GMPLS (AG) agencé pour communiquer avec ledit plan de contrôle GMPLS, et iii) un module agent d'adaptation de service (AS) agencé pour traduire pour le plan de contrôle GMPLS les paramètres contenus dans chaque premier message, pour vérifier auprès dudit module agent applicatif (AA) et dudit module agent GMPLS (AG) si lesdits paramètres sont respectivement compatibles avec les applications résidant dans le réseau et avec le plan de contrôle GMPLS, et pour envoyer ledit premier message dans ledit réseau (RG) audit endroit choisi en cas de compatibilité.

9. Système de contrôle de réservation de ressources (S) selon l'une des revendications 7 et 8, **caractérisé en ce que** l'équipement de contrôle de réservation de ressources (S) est implanté dans un noeud de commutation périphérique (R1) dudit réseau (RG).

10. Système de contrôle de réservation de ressources (S) selon l'une des revendications 7 et 8, **caractérisé en ce que** l'équipement de contrôle de réservation de ressources (S) est couplé à chaque noeud de commutation périphérique (R1, R3-R6) dudit réseau (RG).

## Patentansprüche

1. Verfahren zum Aufbau einer Verbindung zwischen externen Knoten (Nj), die an ein Kommunikationsnetzwerk mit Steuerebene GMPLS (RG) angeschlossen sind und jeweils einen Abschnitt (PAj) einer verteilten Anwendung und ein für die Verwaltung des Aufbaus von Verbindungen ausgelegtes Signalisierungsmodul (MSj) umfassen, **dadurch gekennzeichnet, dass** es darin besteht, im Fall der Notwendigkeit des Aufbaus einer Verbindung zwischen dem ersten (N1) und dem zweiten (N2) externen Knoten i) im ersten externen Knoten (N1) anhand eines Kommunikationsdienstsitzungsprotokolls eine erste Nachricht zu erzeugen, welche den Aufbau einer Verbindungssitzung anfordert und Parameter, die eine aufzubauende Verbindung definieren, enthält und diese erste Nachricht anschließend über das besagte Netzwerk (RG) an den zweiten externen Knoten (N2) zu übertragen, ii) die besagte erste Nachricht an einer ausgewählten Stelle des besagten Netzwerks (RG) zu analysieren, um die Parameter, die sie für die Steuerebene GMPLS enthält, zu übersetzen und deren Kompatibilität mit anderen im Netzwerk vorhandenen Anwendungen und mit der Steuerebene GMPLS zu überprüfen, iii) im Fall der Kompatibilität die besagte erste Nachricht anhand des Kommunikationsdienstsitzungsprotokolls in dem Netzwerk auszusenden, um sie an den besagten zweiten externen Knoten (N2) zu übertragen, iv) nach Empfang der besagten ersten Nachricht an dem besagten zweiten externen Knoten (N2) zu ermitteln, ob die Verbindungsparameter, die darin enthalten sind, von seinem Abschnitt der verteilten Anwendung (PA2) und/oder seinem Signalisierungsmodul (MS2) unterstützt werden, v) wenn sie unterstützt werden, eine zweite Nachricht zur Bestätigung des Sitzungsaufbaus anhand des Kommunikationsdienstsitzungsprotokolls an den besagten ersten externen Knoten (N1) zu übertragen, so dass sein Signalisierungsmodul (MS1) den Aufbau der besagten Verbindung initiiert.

2. Verfahren nach Anspruch 1, **dadurch gekennzeichnet, dass**, bevor die besagte erste Nachricht übertragen wird, der besagte Abschnitt der verteilten Anwendung (PA1) des ersten externen Knotens (N1) die besagten Verbindungsparameter an ein Dienstanpassungsmodul (MA1), welches er umfasst, überträgt, damit es an dem Signalisierungsmodul (MS1) überprüft, ob es die besagten Verbindungsparameter unterstützt, und dass man im Fall der Unterstützung die besagte erste Nachricht mit dem besagten Dienstanpassungsmodul (MA1) des ersten externen Knotens (N1) erzeugt und sie anhand des Kommunikationsdienstsitzungsprotokolls überträgt.

3. Verfahren nach einem der Ansprüche 1 und 2, **dadurch gekennzeichnet, dass** man in Schritt ii) die besagte erste Nachricht der Kommunikationsdienstsitzung anhand einer an das besagte Netzwerk (RG) gekoppelten Einrichtung zur Steuerung der Ressourcenreservierung (S) an mindestens einer ausgewählten Stelle, welche ein Anwendungsagentmodul (AA), das geeignet ist, den Abschnitt der verteilten Anwendung (PA2) des zweiten externen Knotens (N2) zu ersetzen, ein Agentmodul GMPLS (AG), welches für die Kommunikation mit der besagten Steuerebene GMPLS geeignet ist, und ein Dienstanpassungsagentmodul (AA), welches dazu ausgelegt ist, die in jeder ersten Nachricht enthaltenen Verbindungsparameter für die Steuerebene GMPLS zu übersetzen und an dem besagten Anwendungsagentmodul (AA) und dem besagten Agentmodul GMPLS (AG) zu überprüfen, ob die in jeder ersten Nachricht enthaltenen Parameter jeweils mit den anderen im Netzwerk (RG) vorhandenen Anwendungen und mit der besagten Steuerebene GMPLS kompatibel sind, umfasst, analysiert, und dass in Schritt iii) das besagte Anwendungsagentmodul (AA) die Aussendung der besagten ersten Nachricht im besagten Netzwerk (RG) an der besagten ausgewählten Stelle im Fall der Kompatibilität vornimmt.

4. Verfahren nach Anspruch 3, **dadurch gekennzeichnet, dass** die besagte ausgewählte Stelle ein Vermittlungsknoten (R1) des Netzwerks (RG) ist, an weichen der besagte erste externe Knoten (N1) angeschlossen ist und der ihm als Eingangspunkt dient.

5. Verfahren nach einem der Ansprüche 1 bis 4, **dadurch gekennzeichnet, dass** in Schritt iv) der besagte zweite externe Knoten (N2) die besagte erste Nachricht über das Kommunikationsdienstsitzungsprotokoll empfängt und an ein Dienstanpassungsmodul (MA2), den er umfasst, überträgt, damit dieses ermittelt, ob die Verbindungsparameter, die sie enthält, von seinem Abschnitt der verteilten Anwendung (PA2) und/oder seinem Signalisierungsmodul (MS2) unterstützt werden, und dass in Schritt v) das besagte Dienstanpassungsmodul (MA2) des besagten zweiten externen Knotens (N2) die besagte zweite Nachricht erzeugt, wenn die besagten Parameter von dem Abschnitt der verteilten Anwendung (PA2) und/oder dem Signalisierungsmodul (MS2) des besagten zweiten externen Knotens (N2) unterstützt werden, damit sie durch die Kommunikationsdienstsitzung an den besagten ersten externen Knoten (N1) übertragen wird.

6. Verfahren nach einem der Ansprüche 2 bis 5, **dadurch gekennzeichnet, dass** in Schritt v) der besagte erste externe Knoten (N1) die besagte an sein Dienstanpassungsmodul (MA1) übertragene zweite Nachricht empfängt, damit er seinem Signalisierungsmodul (MS1) befiehlt, den Aufbau der besagten Verbindung zu initiieren.

7. System zur Steuerung der Ressourcenreservierung, umfassend eine Einrichtung zur Steuerung der Ressourcenreservierung (S) für ein Kommunikationsnetzwerk mit Steuerebene GMPLS (RG), wobei das besagte System weiterhin externe Knoten (Nj) umfasst, welche an das besagte Kommunikationsnetzwerk angeschlossen sind, wobei die besagten externen Knoten (N1, N2) einen ersten externen Knoten (N1) mit einem ersten Abschnitt einer verteilten Anwendung (PA1) und einem ersten Signalisierungsmodul (MS1), welches für die Verwaltung des Aufbaus von Verbindungen mit mindestens einem zweiten externen Knoten (N2) ausgelegt ist, und einen zweiten externen Knoten (N2) mit einem zweiten Abschnitt (PA2) der besagten verteilten Anwendung und einem zweiten Signalisierungsmodul (MS2), welches für die Verwaltung des Aufbaus von Verbindungen mit zumindest dem ersten externen Knoten (N1) ausgelegt ist, umfasst, wobei der erste externe Knoten (N1) weiterhin ein Dienstanpassungsmodul (MA1) umfasst, welches dazu ausgelegt ist, im Fall des Empfangs von Parametern, welche eine mit dem zweiten externen Knoten (N2) aufzubauende Verbindung definieren und von dem ersten Abschnitt der verteilten Anwendung (PA1) stammen, an dem ersten Signalisierungsmodul (MS1) zu überprüfen, ob es die besagten Verbindungsparameter unterstützt, und im Fall der Unterstützung für den besagten zweiten externen Knoten (N2) eine erste Nachricht zu erzeugen, welche den Aufbau einer Verbindungssitzung anfordert und die besagten Parameter, die die aufzubauende Verbindung definieren, enthält, damit sie anhand eines Kommunikationsdienstsitzungsprotokolls an den zweiten externen Knoten (N2) übertragen wird, und dass im Fall des Empfangs einer zweiten Nachricht, welche auf die besagte zuvor übertragene erste Nachricht antwortet, das besagte Dienstanpassungsmodul (MA1) dazu ausgelegt ist, dem besagten ersten Signalisierungsmodul (MS1) zu befehlen, den Aufbau der Verbindung, die Gegenstand der besagten ersten und der besagten zweiten Nachricht ist, zu initiieren, und wobei der zweite externe Knoten (N2) ein zweites Dienstanpassungsmodul (MS2) umfasst, welches dazu ausgelegt ist, im Fall des Empfangs der ersten Nachricht zu ermitteln, ob die in der besagten ersten Nachricht enthaltenen Verbindungsparameter von dem zweiten Abschnitt der verteilten Anwendung (PA2) und/oder dem zweiten Signalisierungsmodul (MS2) unterstützt werden, und im Fall der Unterstützung anschließend die zweite Nachricht zur Bestätigung des Sitzungsaufbaus an den ersten externen Knoten (N1), welcher die besagte erste Nachricht übertragen hat, zu erzeugen, so dass das erste Signalisierungsmodul (MS1) den Aufbau der Verbindung, welche Gegenstand der ersten Nachricht ist, initiiert,
**dadurch gekennzeichnet, dass** die besagte Einrichtung zur Steuerung der Ressourcenreservierung (S) dazu ausgelegt ist, an mindestens einer ausgewählten Stelle des besagten Netzwerks (RG) jede von dem ersten externen Knoten (N1) an den zweiten externen Knoten (N2) durch eine Kommunikationsdienstsitzung übertragene Nachricht, welche den Aufbau einer Verbindungssitzung anfordert und Parameter, welche eine aufzubauende Verbindung definierten, enthält, zu analysieren, um ihre Parameter für die Steuerebene GMPLS zu übersetzen und deren Kompatibilität mit anderen in dem besagten Netzwerk (RG) vorhandenen Anwendungen und mit der besagten Steuerebene GMPLS zu überprüfen, und ii) im Fall der Kompatibilität die besagte erste Nachricht in dem besagten Netzwerk auszusenden, um sie bei Fortführung der Kommunikationsdienstsitzung an den besagten zweiten externen Knoten (N2) zu übertragen.

8. System zur Steuerung der Ressourcenreservierung (S) nach Anspruch 7, **dadurch gekennzeichnet, dass** die Einrichtung zur Steuerung der Ressourcenreservierung (S) umfasst: i) ein Anwendungsagentmodul (AA), welches dafür konfiguriert ist, den Abschnitt der verteilten Anwendung (PA2) des besagten zweiten externen Knotens (N2) zu ersetzen, ii) ein Agentmodul GMPLS (AG), welches für die Kommunikation mit der besagten Steuerebene GMPLS ausgelegt ist, und iii) ein Dienstanpassungsagentmodul (AS), welches dafür konfiguriert ist, die in jeder ersten Nachricht enthaltenen Parameter für die Steuerebene GMPLS zu übersetzen, an dem besagten Anwendungsagentmodul (AA) und dem besagten Agentmodul GMPLS (AG) zu überprüfen, ob die besagten Parameter jeweils mit den im Netzwerk vorhandenen Anwendungen und mit der Steuerebene GMPL kompatibel sind, und im Fall der Kompatibilität die besagte erste Nachricht in dem besagten Netzwerk (RG) an die besagte ausgewählte Stelle zu senden.

9. System zur Steuerung der Ressourcenreservierung (S) nach einem der Ansprüche 7 und 8, **dadurch gekennzeichnet, dass** die Einrichtung zur Steuerung der Ressourcenreservierung (S) in einem peripheren Vermittlungsknoten (R1) des besagten Netzwerks (RG) angeordnet ist.

10. System zur Steuerung der Ressourcenreservierung (S) nach einem der Ansprüche 7 und 8, **dadurch gekennzeichnet, dass** die Einrichtung zur Steuerung der Ressourcenreservierung (S) an jeden peripheren Vermittlungsknoten (R1, R3-R6) des besagten Netzwerks (RG) gekoppelt ist.

## Claims

1. A method for establishing a connection between external nodes (Nj) connected to a GMPLS control plane communication network (RG) and each comprising a portion (Paj) of a distributed application and a signalling module (MSj) arranged to manage the establishment of connections, **characterized in that** it consists, if needed, of establishing a connection between first (N1) and second (N2) external nodes, i) of generating in the first external node (N1), by means of a communication service session protocol, a first message requesting the establishment of a connection session and comprising parameters defining a connection to be established, then of transmitting that first message to the second external node (N2) via said network (RG), ii) of analyzing said first message in a chosen location of said network (RG) in order to translate the parameters that it contains for the GMPLS control plane and to verify their compatibility with other applications residing in the network and with the GMPLS control plane, iii) in the event of compatibility, of sending said first message within said network (RG), by means of the communication service session protocol, in order to transmit it to said second external node (N2), iv) upon receipt of said first message in said second external node (N2), of determining whether the connection parameters that it contains are supported by the distributed application portion (PA2) of same and/or the signalling module (MS2) of same, v) if supported, of transmitting a second message confirming the establishment of a session to said first external node (N1), by means of the communication service session protocol, so that the signalling module (MS1) of same initiates the establishment of said connection.

2. A method according to claim 1, **characterized in that** before transmitting said first message, said distributed application portion (PA1) of the first external node (N1) transmits said connection parameters to a service adaptation module (MA1) that it comprises so that it can verify with the signalling module (MS1) whether it supports said connection parameters, and if supported, said first message is generated with said service adaptation module (MA1) of the first external node (N1) and is transmitted by means of the communication service session protocol.

3. A method according to one of the claims 1 and 2, **characterized in that** in ii) said first message of the communication service session is analyzed by means of a resource reservation control equipment (S) coupled to said network (RG) in at least one chosen location and comprising an application agent module (AA) capable of substituting for the distributed application portion (PA2) of the second external node (N2), a GMPLS agent module (AG) able to communicate with said GMPLS control plane, and a service adaptation agent module (AA) arranged to translate the connection parameters contained in each first message for the GMPLS control plane and to verify with said application agent module (AA) and GMPLS agent module (AG) if the parameters contained in each first message are respectively compatible with the other applications residing in the network (RG) and with said GMPLS control plane, and **in that** in iii) said application agent module (AA) sends said first message within said network (RG) to said chosen location in the event of compatibility.

4. A method according to claim 3, **characterized in that** said chosen location is a switching node (R1) of the network (RG) to which said first external node (N1) is connected and that serves as the entry point of same.

5. A method according to one of the claims 1 to 4, **characterized in that** in iv) said second external node (E2) receives said first message via the communication service session protocol and transmits it to a service adaptation module (MA2) that it comprises, in order to determine whether the connection parameters that it contains are supported by the distributed application portion (PA2) of same and/or the signalling module (MS2) of same, and **in that** in v) said service adaptation module (MA2) of said second external node (N2) generates said second message when said parameters are supported by the distributed application portion (PA2) and/or the signalling module (MS2) of said second external node (N2), so that it can be transmitted by the communication service session to said first external node (N1).

6. A method according to one of the claims 2 to 5, **characterized in that** in v) said first external node (N1) receives said second message transmitted to the service adaptation module (MA1) of same so that it can order the signalling module (MS1) of same to initiate the establishment of said connection.

7. A resource reservation control system comprising a resource reservation control equipment (S) for a GMPLS control plane communication network (RG), said system further comprising external nodes (Nj) connected to said communication network, said external nodes (N1, N2) including a first external node (N1) comprising a first portion of a distributed application (PA1) and a first signalling module (MS1) arranged to manage the establishment of connections with at least one second external node (N2) and a second external node (N2) comprising a second portion (PA2) of said distributed application and a second signalling module (MS2) arranged to manage the establishment of connections with at least the first external node (N1), wherein the first external node (N1) further comprises a service adaptation module (MA1) arranged, in the event of receiving parameters defining a connection to be established with the second external node (N2) and coming from the first distributed application portion (PA1), to verify with the first signalling module (MS1) whether it supports said connection parameters, and if supported, to generate for said second external node (N2) a first message requesting the establishment of a connection session and comprising said parameters defining the connection to be established, so that it can be transmitted by means of a communication service session protocol to the second external node (N2) and in that if a second message is received responding to said previously transmitted first message, said service adaptation module (MA1) is arranged to order said first signalling module (MS1) to initiate the establishment of the connection referred to by said first and second messages, and wherein the second external node (N2) comprises a second service adaptation module (MS2) arranged to determine, when the first message is received, whether the connection parameters that said first message contains are supported by the second distributed application portion (PA2) and/or the second signalling module (MS2), then, if supported, to generate the second message confirming the establishment of a session intended for the first external node (N1) that had transmitted said first message, so that the first signalling module (MS1) initiates the establishment of the connection referred to by said first message
**characterized in that** said resource reservation control equipment (S) arranged i) to analyze in at least one chosen location of said network (RG) each first message, transmitted from the first external node (N1) to the second external node (N2) by a communication service session, requesting the establishment of a connection session and comprising parameters defining a connection to be established, in order to translate its parameters for the GMPLS control plane and to verify their compatibility with other applications residing in said network (RG) and with said GMPLS control plane, and ii) in the event of compatibility, to send said first message within said network in order to transmit it to said second external node (N2) while continuing the communication service session.

8. A resource reservation control system (S) according to claim 7, **characterized in that** the resource reservation control equipment (S) comprises i) an application agent module (AA) arranged to substitute for the distributed application portion (PA2) of said second external node (N2), ii) a GMPLS agent module (AG) arranged to communicate with said GMPLS control plane, and iii) a service adaptation agent module (AS) arranged to translate for the GMPLS control plane the parameters contained in each first message, to verify with said application agent module (AA) and said GMPLS agent module (AG) whether said parameters are respectively compatible with the applications residing in the network and with the GMPLS control plane, and to send said first message within said network (RG) to said chosen location in the event of compatibility.

9. A resource reservation control system (S) according to one of the claims 7 and 8, **characterized in that** the resource reservation control equipment (S) is located in a peripheral switching node (R1) of said network (RG).

10. A resource reservation control system (S) according to one of the claims 7 and 8, **characterized in that** the resource reservation control equipment (S) is coupled with each peripheral switching node (R1, R3-R6) of said network (RG).
